(19) Europäisches Patentamt
European Patent Office
Office européen des brevets

(11) **EP 4 722 000 A1**

(12) **EUROPEAN PATENT APPLICATION**

(43) Date of publication:
**08.04.2026 Bulletin 2026/15**

(21) Application number: **25194236.3**

(22) Date of filing: **06.08.2025**

(51) International Patent Classification (IPC):
***B60C 9/20*** *(2006.01)* *B60C 9/18* *(2006.01)*
*B60C 9/22* *(2006.01)* *B60C 11/00* *(2006.01)*

(52) Cooperative Patent Classification (CPC):
**B60C 9/2003;** B60C 2009/1828; B60C 2009/2048; B60C 2009/2074; B60C 2009/2077; B60C 2009/2083; B60C 2009/209; B60C 2009/2096; B60C 2009/2242; B60C 2009/2247; B60C 2009/2252; B60C 2009/2257; B60C 2009/2266; B60C 2009/2276; B60C 2009/2285; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 JP 2024153963**

(71) Applicant: **SUMITOMO RUBBER INDUSTRIES, LTD.**
**Kobe-shi, Hyogo 651-0072 (JP)**

(72) Inventor: **OKABE, Noboru**
**Kobe-shi, 651-0072 (JP)**

(74) Representative: **TBK**
**Bavariaring 4-6**
**80336 München (DE)**

(54) **TIRE**

(57) To improve the durability of tires during high-speed running, provided is a tire comprising a carcass, a belt provided on the radially outer side of the carcass, a band having a band cord and provided on the radially outer side of the belt, and a tread provided on the radially outer side of the band, wherein the band cord is a sustainable polyester cord, the tire satisfies the following formula (1), when the cord diameter of the band cord is d (mm), the number of cords present in a direction 5 cm perpendicular to the longitudinal direction is D (cords/5 cm), the dimensional stability index is DSI (%), the loss tangent 30°C tan δ is measured under the conditions of the temperature of the tread of 30°C, the initial strain of 5%, the dynamic strain of 1%, and the frequency of 10 Hz, and the thickness of the tread is A (mm).

$$(d \times D) / (DSI \times 30\ ^\circ C \tan \delta \times A) \geqq 0.7 \qquad (1)$$

FIG. 1

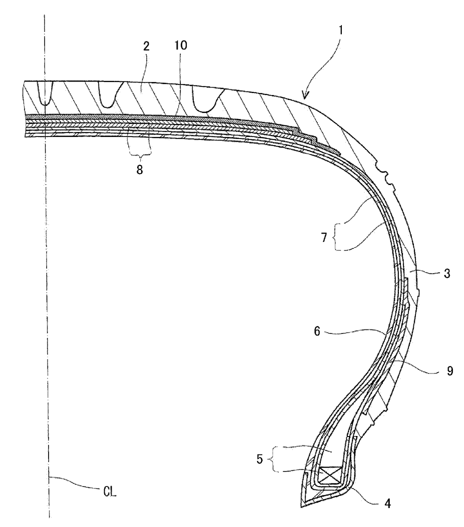




EP 4 722 000 A1

(52) Cooperative Patent Classification (CPC): (Cont.)
B60C 2011/0033

## Description

[TECHNICAL FIELD]

The present invention relates to a tire.

[BACKGROUND ART]

As disclosed in Patent document 1, in passenger car tires, a band (also called a cap ply) is generally provided between the tread and the belt as a belt reinforcing layer to prevent tire deformation due to centrifugal force during high-speed running.

[Prior art documents]

[Patent documents]

[Patent Document 1] JP 2022-38812 A

[SUMMARY OF THE INVENTION]

[PROBLEM TO BE SOLVED BY THE INVENTION]

An object of the present invention is to improve the durability of a tire during high-speed running.

[MEANS FOR SOLVING THE PROBLEM]

The present invention is;

a tire provided with a carcass; a belt provided on the outer side of the carcass in the tire radial direction; a band comprising a band cord and provided on an outer side of the belt in the tire radial direction; and a tread provided on the outer side of the band in the tire radial direction, wherein,
the band cord is a sustainable polyester cord; and
the following formula (1) is satisfied when the cord diameter of the band cord is d (mm), the number of cords present in a width of 5 cm in a direction perpendicular to the longitudinal direction of the tire is D (cords/5 cm), the dimensional stability index is DSI (%), the loss tangent measured under conditions of a temperature of 30 °C, an initial strain of 5%, a dynamic strain of 1%, a frequency of 10 Hz, in a deformation mode; tensile, and the thickness of the tread is A (mm).

$$(d \times D) / (DSI \times 30\ ^\circ C \tan \delta \times A) \geqq 0.7 \qquad (1)$$

[EFFECT OF THE INVENTION]

According to the present invention, it is possible to improve the durability of a tire during high-speed running.

[BRIEF EXPLANATION OF DRAWINGS]

FIG. 1 is a schematic cross-sectional view illustrating a tire according to an embodiment of the present invention.

[EMBODIMENTS FOR CARRYING OUT THE INVENTION]

[1] Features of the tire according to the present invention

First, the features of the tire according to the present invention will be described.

1. Overview

The tire according to the present invention comprises a carcass, a belt provided on the radially outer side of the carcass, a band having a band cord and provided on the radially outer side of the belt, and a tread provided on the radially

outer side of the band. The band cord is a sustainable polyester cord. The tire satisfies the following formula (1) when the cord diameter of the band cord is d (mm), the number of cords present in a width of 5 cm in a direction perpendicular to the longitudinal direction of the tire is D (cords / 5 cm), the dimensional stability index is DSI (%), the loss tangent measured under the conditions of a tread temperature of 30°C, an initial strain of 5%, a dynamic strain of 1%, a frequency of 10 Hz, and a deformation mode; tensile is 30°C tan δ, and the thickness of the tread is A (mm).

$$(d \times D) / (DSI \times 30\ °C\ \tan\delta \times A) \geqq 0.7 \qquad (1)$$

In the above, the dimensional stability index DSI (%) is the sum (E + HS) of the intermediate elongation E (%) measured in accordance with the test method specified in "8.7 Elongation under constant load" of JIS L1017 "Test methods for synthetic fiber tire cords" and the dry heat shrinkage HS (%) measured in accordance with the test method specified in "8.10 Dry heat shrinkage "of JIS L1017 "Test methods for synthetic fiber tire cords" and can be considered as an index showing the ease of deformation when subjected to tensile stress and when heated. A cord with a large dimensional stability index DSI is considered more susceptible to deformation.

The intermediate elongation E (%) can be determined as the elongation (%) at a point on a load-elongation curve corresponding to a specified load of 2.0 cN/dtex obtained by taking one cord from a vulcanized tire and conducting a tensile test under conditions of a temperature of 100 ± 2°C, a grabbing interval of 250 mm, and a tensile speed of 300 ±20 mm/min. The dry heat shrinkage HS (%) can be determined as the heat shrinkage rate (%) after a cord test piece of a predetermined length (300 mm or more) is heated for 5 minutes at a temperature of 180 °C under no load.

It is believed that these characteristics can improve the durability of the tire during high-speed running.

2. Mechanism of the effect manifestation in the tire according to the present invention

The mechanism by which the above-mentioned effects are exhibited in the tire according to the present invention is believed to be as follows.

(1) Use of sustainable polyester cord

In the tire according to the present invention, a sustainable polyester cord is used for the band cord.

In the present invention, the sustainable polyester cord refers to a cord made entirely or partially from sustainable polyester, such as recycled polyester regenerated from plastic waste such as PET bottles or used clothing using various recycling methods such as mechanical recycling or chemical recycling, and a bio-polyester produced using bio-derived raw materials. which can reduce the environmental impact and save resources.

However, sustainable polyester cord has a large dimensional stability index (described later) and a low modulus in a tire. Therefore, when the sustainable polyester cord is used for a band cord, the role of the band, which is a belt reinforcing layer, i.e., the effect of suppressing belt vibration during running, is not fully exerted, and there is a concern that this may lead to deterioration of tire durability during high-speed running.

(2) Control of the parameter ((d × D) / (DSI × 30 °C tan δ × A))

In the present invention, it is controlled to satisfy the following formula (1), when the cord diameter of the band cord is d (mm), the number of cords (ends) present in a 5 cm in the direction perpendicular to the longitudinal direction is D (cords / 5 cm), the dimensional stability index is DSI (%), the loss tangent measured under the conditions of a tread temperature of 30 °C, an initial strain of 5%, a dynamic strain of 1%, a frequency of 10 Hz, and a deformation mode; tensile is 30 °C tan δ, and the thickness of the tread is A (mm ).

$$(d \times D) / (DSI \times 30\ °C\ \tan\delta \times A) \geqq 0.7 \qquad (1)$$

That is, it is considered that the durability of a tire during high-speed running can be improved by appropriately controlling the parameter related to the sustainable polyester cord ( (d × D) / DSI) and the parameter related to the tread (30 °C tan δ × A).

(a) Control by ((d × D) / DSI)

By using a sustainable polyester cord with a high ratio ((d × D ) / DSI) of the product (d × D) of the cord diameter d and the ends D to the dimensional stability index DSI, the band is more effective in suppressing belt vibration, which is thought to improve the durability of the tire during high-speeds running.

By increasing ($d \times D$), i.e. by arranging cords with large cord diameters with large ends to form the band, the rigidity of the band is increased, and the vibration of the belt can be suppressed. On the other hand, as described above, since cords with a large DSI are easily deformed, by using sustainable polyester cords with a small DSI, the deformation of the band can be suppressed, and the vibration of the belt can be suppressed.

For this reason, it is believed that by increasing ($d \times D$) while decreasing DSI, and thereby controlling (($d \times D$) / DSI) to a large value, belt vibration can be sufficiently suppressed and tire durability during high-speed running can be improved.

(b) Control by (30°C tan $\delta \times A$)

Loss tangent is a viscoelastic parameter that indicates the energy absorption performance. The larger the value, the more energy is absorbed and converted into heat, which causes the tire to heat up, reducing the rigidity of the band and making the belt more likely to vibrate. On the other hand, the thicker the tread, the more likely it is to deform.

For this reason, it is believed that by reducing 30°C tan $\delta$ and reducing A, and thereby controlling (30°C tan $\delta \times A$) to a small value, belt vibration and tread deformation can be sufficiently suppressed, thereby improving the durability of the tire during high-speed running.

In this manner, by controlling (($d \times D$) / DSI) to a large value and controlling (30 °C tan $\delta \times A$) to a small value, and thereby controlling the value of (($d \times D$) / (DSI $\times$ 30 °C tan $\delta \times A$)) to a large value, it is believed that these effects work together to improve the durability of the tire during high-speed running, even when sustainable polyester cord is used for the band cord.

[2] More preferred embodiments of the tire according to the present invention

The tire according to the present invention can achieve even greater effects by adopting the following aspects.

1. Band cord

(1) Material

As described above, the band cord is made of a sustainable polyester cord. As the sustainable polyester cord, a cord made of one or more twisted yarns containing sustainable polyester fibers can be used. For example, it is preferable to use a single-twisted cord made of one twisted yarn containing sustainable polyester fibers or a double-twisted cord made of two twisted yarns containing sustainable polyester fibers.

The sustainable polyester cord may be formed by twisting a yarn composed only of filaments of sustainable polyester fiber, or may be formed by twisting a yarn composed of a mixture of filaments of sustainable polyester fiber and filaments of other fibers (such as polyester fibers other than sustainable polyester fiber, polyamide fibers, etc.).

Among the sustainable polyester fibers, the use of sustainable polyethylene terephthalate (PET) fibers is preferred. Among the sustainable polyester fibers with small modulus, the sustainable PET fibers are preferred as band cords because they are materials with high rigidity. As described above, examples of specific sustainable polyester fibers include polyester fibers (recycled polyester fibers) regenerated by various recycling methods, such as sustainable polyester fibers (mechanical recycled polyester fibers) produced using a mechanical recycling method, and bio-derived polyester fibers (biomass polyester fibers). The recycled polyester fibers may be recycled PET fibers (regenerated PET fibers) that are recycled by collecting plastic waste such as used PET bottles. As described above, the use of such recycled polyester fibers or biomass polyester fibers is preferable from the viewpoint of environmental protection.

(2) Twist factor

From the viewpoint of the effect of the present invention (improving tire durability during high-speed running), the twist factor of the sustainable polyester cord is preferably more than 120, more than 121, more than 150, more than 200, more than 234, more than 250, or more than 257. This increases the rigidity of the band and increases the effect of suppressing belt vibration, which is thought to improve tire durability during high-speed running. On the other hand, from another viewpoint (ride comfort), it is preferably less than 258, less than 235, or less than 122.

In the present invention, the twist factor is a value defined by the following formula based on the total fineness (dtex) of the sustainable polyester fiber and the number of twists per 10 cm length (turns / 10 cm) in the sustainable polyester cord.

$$\text{Twist factor} = (\text{number of twists} \times 10) / [\text{square root of } (10{,}000 / \text{total fineness})]$$

Here, from the viewpoint of the effect of the present invention (improving tire durability during high-speed running), the total fineness of the sustainable polyester cord is preferably more than 1500 dtex, more than 2000 dtex, more than 2100 dtex, more than 2500 dtex, or more than 2800 dtex. This increases the rigidity of the band and enhances the effect of suppressing belt vibration, which is thought to further improve tire durability during high-speed running. On the other hand, from another viewpoint (ride comfort), it is preferably less than 4000 dtex, less than 3500 dtex, less than 3000 dtex, less than 2900 dtex, or less than 2300 dtex.

The total fineness of a sustainable polyester cord is the sum of the fineness of each yarn, including the polyester fiber, that forms the cord, measured in accordance with the method specified in "8.3 Correct fineness" of JIS L1017 :2002 "Test methods for synthetic fiber tire cords." For a cord formed of one yarn, the total fineness corresponds to the fineness of one yarn, and for a cord formed of multiple yarns, the total fineness corresponds to the sum of the fineness of the multiple yarns.

For example, the total fineness of the cord structure 1440 dtex / 1 (the cord is composed of only single yarns of 1440 dtex fineness) is 1440 dtex, and the total fineness of the cord structure 1440 dtex / 2 (the cord is composed of two single yarns of 1440 dtex fineness twisted together) is 2880 dtex.

In addition, from the viewpoint of the effect of the present invention (improvement of tire durability during high-speed running), the number of twists per 10 cm length of the sustainable polyester cord is preferably more than 25 turns / 10 cm, more than 30 turns / 10 cm, more than 40 turns / 10 cm, more than 47 turns / 10 cm, or more than 49 turns / 10 cm. This increases the rigidity of the band and increases the effect of suppressing belt vibration, which is thought to improve tire durability during high-speed running. In addition, from another viewpoint (ride comfort), it is preferable that the number of twists is less than 51 turns / 10 cm, less than 49 turns / 10 cm, or less than 27 turns / 10 cm.

(3) Content of isophthalic acid

When the sustainable polyester cord is a recycled polyester cord regenerated from PET fibers, PET bottles, etc., isophthalic acid may be contained as an impurity, which may cause the quality of the sustainable polyester cord to become unstable. For this reason, the content of isophthalic acid in the sustainable polyester cord is preferably less than 0.1 mol%, which allows a sustainable polyester cord of stable quality to be obtained. It is particularly preferable that the content is 0.0 mol% (no isophthalic acid). The content of isophthalic acid in the sustainable polyester cord can be measured, for example, by high-performance liquid chromatography (HPLC).

(4) Cord diameter d

From the viewpoint of the effect of the present invention (improving tire durability during high-speed running), the cord diameter d of the sustainable polyester cord is preferably more than 0.40 mm, more than 0.45 mm, more than 0.50 mm, 0.54 mm or more, 0.55 mm or more, or 0.66 mm or more. This increases the rigidity of the band and increases the effect of suppressing belt vibration, which is thought to improve tire durability during high-speed running. From another viewpoint (ride comfort), it is preferable that the cord diameter d is less than 0.67 mm, less than 0.56 mm, or less than 0.55 mm.

The "cord diameter" can be measured in accordance with the method specified in JIS L1017:2002 "Test methods for synthetic fiber tire cords." When the circumscribing circle of a cross-section perpendicular to the extension direction of the cord is a perfect circle, the term refers to the diameter. When the circumscribing circle is an ellipse or the like, the term refers to the equivalent circle diameter (the diameter of a circle when a perfect circle with the same cross-sectional area is assumed).

(5) Strength S (tensile strength)

From the viewpoint of the effect of the present invention (improvement of tire durability during high-speed running), the strength S (cN/dtex) of the sustainable polyester cord is preferably more than 5.0 cN/dtex, more than 5.5 cN/dtex, 6.0 cN/dtex or more, or 6.4 cN/dtex or more. This increases the rigidity of the band and increases the effect of suppressing belt vibration, which is thought to improve tire durability during high-speed running. On the other hand, from another viewpoint (ride comfort), it is preferably less than 9.0 cN/dtex, less than 8.0 cN/dtex, less than 7.0 cN/dtex, or less than 6.5 cN/dtex.

The strength can be measured in accordance with the method specified in "8.5 Tensile strength and elongation" of JIS L1017 :2002 "Test methods for synthetic fiber tire cords" (grabbing interval of 250 mm, tensile speed of 300 mm/min).

(6) Ends D

From the viewpoint of the effect of the present invention (improvement of tire durability during high-speed running), the ends D (cords/5 cm) of the sustainable polyester cord is preferably more than 30 (cords/5 cm), more than 40 (cords/5 cm), more than 45 (cords/5 cm), or 50 (cords/5 cm) or more. By increasing the ends D, the band becomes more rigid and the effect of suppressing belt vibration becomes greater, which is thought to improve tire durability during high-speed running. On the other hand, from another viewpoint (ride comfort), it is preferably less than 70 (cords/5 cm), less than 60 (cords/5 cm), less than 55 (cords/5 cm), or less than 51 (cords/5 cm).

The ends D can be measured as the number of cords present in a width of 5 cm in the direction perpendicular to the longitudinal direction.

(7) The product of strength S and end D ($S \times D$)

From the viewpoint of the effect of the present invention (improving tire durability during high-speed running), the product ($S \times D$) of the strength S (cN/dtex) and the ends D (pieces/5 cm) of the sustainable polyester cord is preferably more than 270, more than 290, 310 or more, or 320 or more. This increases the rigidity of the band and increases the effect of suppressing belt vibration, which is thought to improve tire durability during high-speed running. On the other hand, from another viewpoint (ride comfort), it is preferably less than 350, less than 340, less than 330, or 320 or less.

(8) ($L \times D / E$)

From the viewpoint of the effect of the present invention (improvement of tire durability during high-speed running), regarding the intermediate elongation E (%) at the specified load L (cN/dtex) of the sustainable polyester cord and the ends D (cords/5 cm), it is preferable that ($L \times D / E$) is 15 or more, 20 or more, 21 or more, 23 or more, or 40 or more. This increases the rigidity of the band, makes the band less likely to deform, and increases the effect of suppressing belt vibration, which is thought to improve the durability of the tire during high-speed running. From another viewpoint (ride comfort), it is preferable less than 41, less than 24, or less than 22.

(9) Dimensional Stability Index (DSI)

From the viewpoint of the effect of the present invention (improvement of tire durability during high-speed running), the dimensional stability index DSI of the sustainable polyester cord is preferably less than 11.5 %, less than 11.0 %, less than 10.5 %, less than 10.3%, less than 8.7%, or less than 6.6%. This makes the band less likely to deform and increases the effect of suppressing belt vibration, which is thought to improve tire durability during high-speed running. On the other hand, from another viewpoint (ride comfort), it is preferably 6.5% or more, 8.6% or more, or 10.2% or more.

As described above, the dimensional stability index DSI is the sum of the intermediate elongation E at a load of 2.0 cN / dtex and the dry heat shrinkage HS at a temperature of 180 °C, both measured in accordance with JIS L1017.

Here, from the viewpoint of the effect of the present invention (improving tire durability during high-speed running), the intermediate elongation E of the sustainable polyester cord is preferably less than 7.0%, less than 6.0%, or less than 5.0%. This makes the band less likely to deform and increases the effect of suppressing belt vibration, which is thought to improve tire durability during high-speed running. On the other hand, from another viewpoint (ride comfort), it is preferably more than 2.0%, more than 2.5%, or more than 3.0%.

From the viewpoint of the effect of the present invention (improving tire durability during high-speed running), the dry heat shrinkage HS of the sustainable polyester cord is preferably less than 8.0%, less than 7.0%, or less than 6.5 %, which is thought to improve tire durability during high-speed running since the band becomes less likely to deform and the effect of suppressing belt vibration is increased. On the other hand, from another viewpoint (ride comfort), it is preferably more than 2.0%, more than 3.0%, or more than 3.5 %.

(10) Breaking elongation

From the viewpoint of the effect of the present invention (improving tire durability during high-speed running), the breaking elongation of the sustainable polyester cord is preferably more than 5%, more than 10%, or more than 15 %. A cord with a large breaking elongation has a high modulus and is more effective in suppressing belt vibrations, which is thought to improve tire durability during high-speed running. On the other hand, from another viewpoint (ride comfort), it is preferably less than 20%, less than 18%, or less than 17%.

The breaking elongation can be measured in accordance with the method specified in JIS L1017:2002 "Testing method for chemical fiber tire cords."

(11) Moist heat resistance strength retention rate

From the viewpoint of the effect of the present invention (improving tire durability during high-speed running), the sustainable polyester cord preferably has a moist heat resistance strength retention rate of 80% or more, 85% or more, or 90% or more. This maintains high rigidity of band and the effect of suppressing belt vibration even under high-humidity and heat conditions, and is therefore thought to improve tire durability during high-speed running.
The above-mentioned moist heat resistance strength retention rate can be obtained by calculating the ratio of the strength after treatment with saturated steam at 135°C for 48 hours (moist heat treatment) to the strength before treatment.

(12) Band formation

A band can be formed by treating the sustainable polyester cord with an adhesive which is then bonded to a prescribed rubber composition for a band. Examples of the adhesive that can be used for bonding include epoxy compounds such as EX-313 (glycerin polyglycidyl ether, Nagase ChemteX Corporation) and RFL (resorcin-formalin-latex).
The band may be one layer or two layers. The band may be formed over the entire width of the tread, or may be formed only on both ends of the tread.

2. Tread

(1) Loss tangent 30 °C tan δ

From the viewpoint of the effect of the present invention (improvement of tire durability during high-speed running), the 30 °C tan δ of the tread is preferably less than 0.35, less than 0.33, less than 0.31, or less than 0.26. A tread with a small 30 °C tan δ is thought to improve tire durability during high-speed running because heat generation is suppressed, a decrease in band rigidity due to temperature rise is suppressed, and the effect of suppressing belt vibration is maintained. On the other hand, from another viewpoint (ride comfort), it is preferably more than 0.20, more than 0.23, more than 0.24, or more than 0.29.
In the above, the loss tangent 30°C tan δ can be measured by using a dynamic viscoelasticity measuring device (e.g., the Eplexor series ( registered trademark) manufactured by GABO Corporation) for a test piece having a length of 20 mm × width of 4 mm × thickness of 1 mm cut out from the cap rubber layer of the tread portion of the tire so that the long side is in the tire circumferential direction and the thickness direction is in the tire radial direction.
The loss tangent 30°C tan δ of the tread can be appropriately adjusted by adjusting, for example, the amount of styrene in the rubber component (polymer), the amount of filler such as silica or carbon black, the content of the softener component, the content of the resin component, etc., in the rubber composition constituting the tread.
Specifically, for example, the loss tangent can be increased by methods such as increasing the amount of styrene in the rubber component (polymer), increasing the amount of filler such as silica or carbon black, reducing the content of the softener component, or increasing the content of the resin component. Conversely, the loss tangent can be decreased by methods such as decreasing the amount of styrene in the polymer, decreasing the amount of filler such as silica or carbon black, increasing the content of the softener component, decreasing the amount of filler such as silica or carbon black, or decreasing the content of the resin component.

(2) Thickness A

From the viewpoint of the effect of the present invention (improving tire durability during high-speed running), the tread thickness A is preferably less than 20 mm, less than 15 mm, or less than 12 mm. This is believed to sufficiently suppress tread deformation and improve tire durability during high-speed running. On the other hand, from another viewpoint (ride comfort), the thickness A is preferably more than 6 mm, more than 8 mm, or more than 10 mm.
In the above description, the tread is described as being one layer consisting of only the layer (cap rubber layer) that becomes the ground contact surface, but it may be configured as two layers with a base rubber layer provided inside the cap rubber layer, or may be configured as three layers, or may be configured as four layers or more. In this case, the tread described above is the cap rubber layer that is the outermost layer on the ground contact surface side, and it is preferable that the above-mentioned parameters related to the tread, such as the loss tangent 30°C tan δ, are satisfied.
In this case, the thickness of the cap rubber layer, which is the outermost layer of the entire tread composed of two or more layers, is preferably 10% or more, more preferably 30% or more, further preferably 50% or more, and particularly preferably 70% or more.
Here, "tread thickness" refers to the thickness of the tread on the tire equatorial plane in the tire radial cross section. In the case where the tread is formed of a single rubber composition, it refers to the thickness of that rubber

composition. In the case where the tread is formed of a laminated structure of multiple rubber compositions, it refers to the thickness of the cap rubber layer, which is the outermost layer on the contact surface side among those layers, and can be measured by aligning the bead portion to the standardized rim width in a cross section cut out in the radial direction of the tire.

Here, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

3. Parameter $((d \times D) / (DSI \times 30\ ^\circ C \tan \delta \times A))$

As described above, in the tire according to the present invention, $((d \times D) / (DSI \times 30\ ^\circ C \tan \delta \times A))$ is controlled to 0.7 or more, but from the viewpoint of the effect of the present invention (improvement of tire durability during high-speed running), it is more preferable that it is 0.71 or more, 0.72 or more, 0.86 or more, 0.92 or more, or 1.07 or more. This increases the effect of the band in suppressing belt vibration, and it is thought that tire durability during high-speed running is improved. On the other hand, from another viewpoint (ride comfort), it is preferable that it is less than 1.08, less than 0.93, less than 0.87, or less than 0.72.

[3] Embodiments

Hereinafter, the present invention will be described in detail based on the embodiments.

1. Tire according to the present embodiment

Fig. 1 is a schematic cross-sectional view illustrating a tire according to the present embodiment. In Fig. 1, the vertical direction is the radial direction of the tire, the horizontal direction is the rotational axis direction of the tire, and the direction perpendicular to the paper surface is the circumferential direction of the tire. In Fig. 1, the dashed dotted line CL represents the equatorial plane of the tire. Note that the shape of this tire is symmetrical with respect to the equatorial plane except for the tread pattern, so Fig. 1 shows 1/4 of the entire tire.

As shown in FIG. 1, a tire 1 comprises a tread 2, a pair of sidewalls 3, a pair of chafers 4, a pair of beads 5, an inner liner 6, a carcass 7, a belt 8, a pair of fillers 9, and a band 10, with the carcass 7, the belt 8, the band 10, and the tread 2 being arranged from the inside to the outside in the tire radial direction.

With this configuration, as described above, a sustainable polyester cord is used as the band cord, and parameters such as the cord diameter d of the band cord are appropriately controlled to satisfy the formula (1), thereby making it possible to improve the durability of the tire during high-speed running.

2. Rubber composition for tread

In this embodiment, the rubber composition for tread can be obtained by kneading various compounding materials such as a rubber component, a reinforcing material, an anti-aging agent, oil, and a resin component.

(1) Compounding materials

(a) Rubber component

The rubber component in the rubber composition for tread is not particularly limited, and for example, diene-based rubbers such as natural rubber (NR), styrene butadiene rubber (SBR), butadiene rubber (BR), isoprene rubber (IR), acrylonitrile butadiene rubber (NBR), chloroprene rubber (CR), and butyl rubber (IIR) may be used. These may be used alone or in combination of two or more kinds. In the present invention, the combination of NR, SBR and BR is preferred.

(a-1) SBR

The weight average molecular weight of the SBR is, for example, more than 100,000 and less than 2,000,000. The styrene content in the SBR is, for example, preferably more than 5 mass%, more preferably more than 10 mass%, and

further preferably more than 15 mass%. On the other hand, it is preferably less than 40 mass%, more preferably less than 35 mass%, and further preferably less than 30 mass%.

The glass transition temperature (Tg) of SBR is preferably -40 °C or lower, more preferably -50 °C or lower, further preferably -60 °C or lower, and particularly preferably -70 °C or lower. On the other hand, the lower limit is not particularly limited, but is preferably -90 °C or higher, for example.

The glass transition temperature (Tg) of the SBR can be determined from a temperature distribution curve of tan δ measured using a viscoelasticity measuring device such as "Eplexor series (registered trademark) manufactured by GABO Corporation). Specifically, a temperature distribution curve of tan δ is measured under conditions of a frequency of 10 Hz, an initial strain of 10%, an amplitude of ±0.5%, and a heating rate of 2°C/min, and the temperature corresponding to the largest tan δ value in the range of -100°C or higher and 40°C or lower on the measured temperature distribution curve is defined as the glass transition temperature (Tg).

When there are two or more points with the largest tan δ value within the range of -100°C or higher and 40°C or lower, the point with the lowest temperature is defined as the glass transition temperature (Tg). For example, when a tan δ peak is within the range of -100°C or higher and 40°C or lower, the peak temperature is defined as the glass transition temperature (Tg) according to the above definition. In addition, when a tan δ peak is in a region below -100°C and a temperature distribution curve is obtained in which tan δ gradually decreases with increasing temperature within the range of -100°C or higher and 40°C or lower, the glass transition temperature (Tg) is defined as -100°C according to the above definition.

The vinyl content (amount of 1,2-bonded butadiene units) of SBR is preferably more than 5% by mass, more preferably more than 10% by mass, and further preferably more than 15% by mass. On the other hand, it is preferably less than 70% by mass, more preferably less than 40% by mass, and further preferably less than 30% by mass. Note that the structural identification of SBR (measurement of styrene content and vinyl content) can be performed using, for example, a JNM-ECA series device manufactured by JEOL Ltd.

The SBR is not particularly limited, and for example, emulsion polymerized styrene butadiene rubber (E-SBR), solution polymerized styrene butadiene rubber (S-SBR), and the like can be used. SBR may be either non-modified SBR or modified SBR. Further, hydrogenated SBR obtained by hydrogenating the butadiene part in SBR may be used. The hydrogenated SBR may be obtained by subsequently hydrogenating the BR part in SBR, or a similar structure may be obtained by copolymerization of styrene, ethylene, and butadiene.

The modified SBR is preferably an SBR having a functional group that interacts with a filler such as silica. Examples thereof include end-modified SBR (end-modified SBR having the above functional group at the terminal) in which at least one end of the SBR is modified with a compound having the above functional group (modifying agent),

main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As the modified SBR, for example, SBR modified with a compound (modifying agent) represented by the following formula can be used.

[Chemical formula 1]

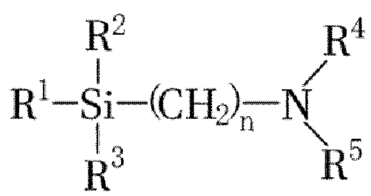

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine; diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Materials Co., Ltd., Asahi Kasei Co., Ltd., Nippon Zeon Co., Ltd., etc. can be used. Note that SBR may be used alone or in combination of two or more.

The content of SBR in 100 parts by mass of the rubber component is preferably 10 parts by mass or more, more preferably 20 parts by mass or more, and further preferably 30 parts by mass or more. The upper limit is, for example, preferably 70 parts by mass or less, more preferably 65 parts by mass or less, and further preferably 60 parts by mass or less.

(a-2) Isoprene-based rubber

Examples of isoprene-based rubber include natural rubber (NR), isoprene rubber (IR), reformed NR, modified NR, and modified IR. Among them, NR is preferred from the standpoint of excellent strength.

As the NR, for example, SVR-L, SIR20, RSS#3, TSR20, etc., which are common in the tire industry, can be used. As the IR, there is no particular limitation, and for example, IR2200 manufactured by Nippon Zeon Co., Ltd. and the like, which are common in the tire industry, can be used. As the reformed NR, deproteinized natural rubber (DPNR), ultra pure natural rubber (UPNR), and the like can be used. As the modified NR, epoxidized natural rubber (ENR), hydrogenated natural rubber (HNR), grafted natural rubber, and the like can be used. As the modified IR, epoxidized isoprene rubber, hydrogenated isoprene rubber, grafted isoprene rubber, and the like can be used. These may be used alone or in combination of two or more.

The amount of the isoprene-based rubber in 100 parts by mass of the rubber component is preferably 5 parts by mass or more, and more preferably 10 parts by mass or more. The upper limit is, for example, preferably 70 parts by mass or less, and more preferably 60 parts by mass or less.

(a-3) BR

The weight average molecular weight of BR is, for example, more than 100,000 and less than 2,000,000. The vinyl content of BR is, for example, more than 1% by mass and less than 30% by mass. The cis content of BR is, for example, more than 1% by mass and 98% by mass or less. The trans content of BR is, for example, more than 1% by mass and less than 60% by mass. Note that the cis content can be measured by infrared absorption spectroscopy.

The BR is not particularly limited, and BR with a high cis content (cis content of 90% or more), BR with a low cis content, BR containing syndiotactic polybutadiene crystals, etc. can be used. The BR may be either unmodified BR or modified BR. As the modified BR, for example, a BR modified with a compound (modifying agent) represented by the following formula can be used.

[Chemical formula 2]

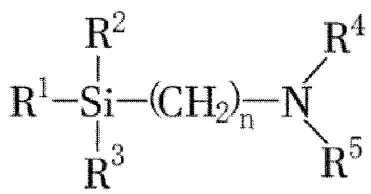

In the formula, $R^1$, $R^2$ and $R^3$ are the same or different and each represents an alkyl group, an alkoxy group, a silyloxy group, an acetal group, a carboxyl group (-COOH), a mercapto group (-SH) or a derivative thereof. $R^4$ and $R^5$ are the same or different and represent a hydrogen atom or an alkyl group. $R^4$ and $R^5$ may be combined to form a ring structure together with the nitrogen atom. n represents an integer.

Examples of the modified BR modified with the compound (modifying agent) represented by the above formula include BR whose polymerization end (active end) is modified with the compound represented by the above formula.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy

group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;

polyglycidyl ethers of aromatic compounds having two or more phenol groups such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;

diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;

epoxy group-containing silane compounds such as 1,3-bis-(glycidyloxypropyl) -tetramethyldisiloxane, and (3-glycidyloxypropyl) - pentamethyldisiloxane;

sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3- (methyldimethoxysilyl) propyl] sulfide, (trimethylsilyl) [3- (methyldiethoxysilyl) propyl] sulfide, (trimethylsilyl) [3- (methyldipropoxysilyl) propyl] sulfide, and (trimethylsilyl) [3- (methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) -3-aminopropyltriethoxysilane, N, N-bis (trimethylsilyl) aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method. These modified BR may be used alone or in combination of two or more.

As the BR, for example, products manufactured by Ube Industries, Ltd., ENEOS Materials Co., Ltd., Asahi Kasei Co., Ltd., Nippon Zeon Co., Ltd., etc. can be used.

The content of BR in 100 parts by mass of the rubber component is preferably 5 parts by mass or more, and more preferably 10 parts by mass or more, while it is preferably 50 parts by mass or less, and more preferably 40 parts by mass or less.

(a-4) Other rubber components

The rubber composition may contain, as other rubber components, rubbers (polymers) that are commonly used in the manufacture of tires, such as nitrile rubber (NBR), as necessary.

The raw materials (monomers) of the above-mentioned synthetic rubbers such as SBR and BR may be derived from underground resources such as petroleum and natural gas, or may be recycled from rubber products such as tires or non-rubber products such as polystyrene.

Monomers obtained by recycling (recycled monomers) are not particularly limited, and examples thereof include recycled isoprene, recycled butadiene, and recycled aromatic vinyl. Examples of the above-mentioned butadiene include 1,2-butadiene and 1,3-butadiene. Examples of the aromatic vinyl include, but are not particularly limited to, styrene. Among them, it is preferable to use recycle-derived isoprene (recycled isoprene), recycle-derived butadiene (recycled butadiene), and/or recycle-derived styrene (recycled styrene) as raw materials.

The method for producing the recycled monomer is not particularly limited, and examples thereof include synthesis from recycle-derived naphtha obtained by decomposing rubber products such as tires. The method for producing the recycle-derived naphtha is also not particularly limited, and examples thereof include decomposing rubber products such as tires under high temperature and pressure, decomposing with microwaves, or mechanically crushing and then extracting.

Furthermore, the raw materials (monomers) of synthetic rubbers such as IR, SBR, and BR may be derived from biomass. Here, biomass refers to substances derived from natural resources such as plants. Examples of biomass include, but are not limited to, agricultural, sugar, wood chips, plant residues after useful components are obtained, plant-derived ethanol, and biomass naphtha. Examples of monomers derived from biomass (biomass monomers) include, but are not limited to, butadiene derived from biomass and aromatic vinyl derived from biomass. Examples of butadiene include 1,2-butadiene and 1,3-butadiene. Examples of aromatic vinyl include, but are not limited to, styrene. In addition, the method for producing biomass monomers is not particularly limited, and examples include biological and/or chemical and/or physical conversion of animals and plants. A representative example of biological conversion is fermentation by microorganisms, and examples of chemical and/or physical conversion include those using catalysts, those using high heat, those using high pressure, those using electromagnetic waves, those using critical liquids, and combinations thereof.

The polymer synthesized from a biomass monomer component (biomass polymer) is not particularly limited, and examples thereof include polybutadiene rubber synthesized from butadiene derived from biomass, aromatic vinyl/butadiene copolymer synthesized from butadiene derived from biomass and/or aromatic vinyl derived from biomass, etc. Examples of the aromatic vinyl/butadiene copolymer include styrene butadiene rubber synthesized from butadiene derived from biomass and/or styrene derived from biomass.

Whether the raw material of a polymer is derived from biomass can be determined by the percent modern carbon (pMC) measured in accordance with ASTM D6866-10.

The pMC is a ratio of the $^{14}C$ concentration of a sample to the $^{14}C$ concentration of a modern standard reference, and this value is used as an index of the biomass ratio of a compound (rubber). The significance of this value will be described below.

In one mole of carbon atoms ($6.02 \times 10^{23}$), there are about $6.02 \times 10^{11}$ $^{14}C$, which is about one trillionth of the number of normal carbon atoms. $^{14}C$ is called a radioisotope, and its half-life is 5730 years, and it decreases regularly. It takes 226,000 years for all of them to decay. Therefore, in fossil fuels such as coal, oil, and natural gas, which are thought to have passed more than 226,000 years after carbon dioxide in the atmosphere was absorbed and fixed to plants and other things, all of the $^{14}C$ elements that were contained in them at the time of fixation have decayed. Therefore, in the present 21st century, fossil fuels such as coal, oil, and natural gas do not contain any $^{14}C$ elements at all. Therefore, chemical substances produced using these fossil fuels as raw materials do not contain any $^{14}C$ elements at all.

On the other hand, $^{14}C$ is constantly produced by nuclear reactions caused by cosmic rays in the atmosphere, and the amount of $^{14}C$ in the atmospheric environment on Earth is constant, balancing with the decrease due to radioactive decay. Therefore, the $^{14}C$ concentration of materials derived from biomass resources circulating in the current environment is approximately $1 \times 10^{-12}$mol% relative to the total C atoms, as mentioned above. Therefore, the difference between these values can be used to calculate the ratio (biomass ratio) of compounds derived from natural resources (compounds derived from biomass resources) in a certain compound (rubber).

This $^{14}C$ is generally measured as follows. Accelerator mass spectrometry based on a tandem accelerator is used to measure the $^{13}C$ concentration ($^{13}C/^{12}C$) and the $^{14}C$ concentration ($^{14}C/^{12}C$). In the measurement, the $^{14}C$ concentration in circulating carbon in nature as of 1950 is adopted as the modern standard reference for the $^{14}C$ concentration. As a specific standard substance, an oxalic acid standard provided by NIST (National Institute of Standards and Technology) is used. The specific radioactivity of carbon (radioactivity of $^{14}C$ per gram of carbon) in this oxalic acid is separated for each carbon isotope, and $^{13}C$ is corrected to a constant value, and the value corrected for decay from 1950 to the date of measurement is used as the standard $^{14}C$ concentration value (100%). The ratio of this value to the value of the actually measured sample is the pMC value.

Therefore, if rubber is made from 100% biomass (natural) derived materials, it will show a value of about 110 pMC, as it is often not 100 under normal conditions, although there are regional differences. On the other hand, when the $^{14}C$ concentration is measured for chemical substances derived from fossil fuels such as petroleum, it will show a value of about 0 pMC (for example, 0.3 pMC). This value corresponds to the biomass ratio of 0% mentioned above.
For the above reasons, it is preferable from the standpoint of environmental protection (sustainability) to use a material such as rubber having a high pMC value, that is, a material such as rubber having a high biomass ratio for the rubber composition.

(b) Compounding materials other than rubber components

(b-1) Filler

The rubber composition contains silica as a reinforcing agent, and may contain other fillers, such as carbon black, calcium carbonate, talc, alumina, clay, aluminum hydroxide, and mica. When silica is used, it is preferable to use it in combination with a silane coupling agent.
The amount of the filler is preferably more than 75 parts by mass of silica per 100 parts by mass of the rubber component, but the total amount of silica and other fillers is preferably 80 parts by mass or more, and more preferably 90 parts by mass or more, per 100 parts by mass of the rubber component. On the other hand, from the viewpoint of dispersibility in the rubber composition, it is preferably 150 parts by mass or less, and more preferably 100 parts by mass or less.

(i) Silica

Since silica has OH groups on its surface, by including silica in the rubber composition, hydrogen bonds are formed between the silica surfaces, and the silica surfaces also interact with the rubber components. Therefore, during running, it is easy to generate and transmit force inside the rubber, and it is easy to transmit the force generated during cornering, so that excellent steering stability can be ensured. In addition, since the OH groups on the surface can capture ozone, the ozone resistance is improved, and the durability of the tire can be improved.
From the viewpoint of obtaining good durability, the BET specific surface area of the silica is preferably more than 100 $m^2/g$, and more preferably more than 130 $m^2/g$, and is preferably less than 250 $m^2/g$, and more preferably less than 200 $m^2/g$. The BET specific surface area is the $N_2$ SA value measured by the BET method according to ASTM D3037-93.
The silica is not particularly limited, and for example, silica commonly used in the tire industry, such as silica prepared by a dry method (anhydrous silica) or silica prepared by a wet method (hydrated silica), can be used. Commercially available products include products from Evonik Industries Co., Ltd., Rhodia Co., Ltd., Tosoh Silica Co., Ltd., Solvay Japan Co., Ltd., Tokuyama Co., Ltd., etc.
The raw material of silica is not particularly limited, and may be, for example, a mineral-derived raw material such as quartz, a biological raw material such as rice husk (for example, silica made from biomass materials such as rice husk), or silica recycled from a product containing silica. Among them, hydrated silica prepared by a wet method is preferred because it has a large amount of silanol groups. From the viewpoint of environmental protection, sustainable silica (silica made from biomass materials or silica recycled from a product containing silica) is preferred.
Silica made from biomass materials (biomass silica) can be obtained, for example, by extracting silicate from rice husk ash obtained by burning rice husks using a sodium hydroxide solution, and then reacting the silicate with sulfuric acid in the same manner as conventional wet-process silica to produce a silicon dioxide precipitate, which is then filtered, washed with water, dried, and pulverized.
The silica recycled from a product containing silica (recycled silica) can be, for example, silica recycled from a product containing silica, such as electronic parts such as semiconductors, tires, desiccants, and filtering materials such as diatomaceous earth. The recycle method is not particularly limited, and examples include pyrolysis and decomposition by electromagnetic waves. Among them, silica recycled from electronic parts such as semiconductors or tires is preferred.
When silica crystallizes, it does not dissolve in water and its component silicic acid cannot be used. By controlling the combustion temperature and combustion time, the crystallization of silica in rice husk ash can be suppressed (see JP 2009-2594 A, Akita Prefectural University Web Journal B/2019, vol. 6, pp. 216-222, etc.).
As an amorphous silica extracted from rice husks, commercially available products from Wilmar Co., etc. can be used.
These silicas may be used alone or in combination of two or more. From the viewpoint of environmental protection (sustainability), it is preferable to use sustainable silica such as biomass silica or recycled silica.
As described above, the content of silica per 100 parts by mass of the rubber component is preferably more than 75 parts by mass, more preferably 80 parts by mass or more, and further preferably 90 parts by mass or more, relative to 100 parts by mass of the rubber component. By increasing the content of silica, the 30 °C tan $\delta$ of the rubber composition

can be reduced. The upper limit is, for example, preferably 150 parts by mass or less, and more preferably 100 parts by mass or less.

(b-1-2) Silane coupling agent

When silica is used, it is preferable to use a silane coupling agent in combination to increase the dispersibility of the silica and to improve the mechanical properties and moldability by reacting with the silica.
The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. Among these, silane coupling agents having a thiocarbonyl group such as the above-mentioned NXT are preferred. These may be used alone or in combination of two or more kinds.

As the silane coupling agent, for example, products of Evonik Industries Co., Ltd., Momentive Co., Ltd., Shin-Etsu Silicone Co., Ltd., Tokyo Chemical Industry Co., Ltd., Azumax Co., Ltd., Dow Corning Toray Co., Ltd., etc. can be used.
The content of the silane coupling agent is, for example, preferably more than 3 parts by mass, more preferably 5 parts by mass or more, further preferably 7 parts by mass or more, and further preferably 8 parts by mass or more, relative to 100 parts by mass of silica. The upper limit is, for example, preferably less than 15 parts by mass, more preferably 12 parts by mass or less, and further preferably 9 parts by mass or less.

(b-1-3) Carbon black

Carbon black is preferably used for improving the crack growth resistance, durability, resistance to deterioration due to ultraviolet light, and the like of the tire.
From the viewpoint of reinforcing rubber, the nitrogen adsorption specific surface area ($N_2SA$) of carbon black is preferably, for example, 30$m^2$/g or more, more preferably 50$m^2$/g or more, and further preferably 60$m^2$/g or more. On the other hand, from the viewpoint of heat generation, it is preferably 250$m^2$/g or less, more preferably 150 $m^2$/g or less, and further preferably 120$m^2$/g or less. The nitrogen adsorption specific surface area of carbon black is measured in accordance with ASTM D4820-93.
From the viewpoint of rubber rigidity, the dibutyl phthalate (DBP) absorption of carbon black is preferably, for example, 50 ml/100 g or more, and more preferably 100 ml/100 g or more. On the other hand, from the viewpoint of rubber deformation followability, the DBP absorption of carbon black is preferably 250 ml/100 g or less, and more preferably 150 ml/100 g or less. The DBP absorption of carbon black is measured in accordance with ASTM D2414-93.
The carbon black is not particularly limited, and examples thereof include furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; and channel blacks (channel carbon blacks) such as EPC, MPC, and CC. Examples of product numbers include N134, N110, N220, N234, N219, N339, N330, N326, N351, N550, and N762. These may be used alone or in combination of two or more.
The raw material for carbon black may be a biomass material such as lignin, vegetable oil, or a pyrolysis oil obtained by pyrolyzing rubber products containing carbon black, such as waste tires (recycled carbon black), in addition to mineral oil. The use of such sustainable carbon black is preferable from the viewpoint of environmental protection.
The carbon black may be produced by combustion, such as in a furnace process, by hydrothermal carbonization (HTC), or by pyrolysis of methane, such as in a thermal black process.
As commercially available products, products of Asahi Carbon Co., Ltd., Cabot Japan Co., Ltd., Tokai Carbon Co., Ltd., Mitsubishi Chemical Co., Ltd., Lion Corporation, Nippon Steel Carbon Co., Ltd., Columbia Carbon Co., Ltd., etc.

can be used. These may be used alone or in combination of two or more kinds.

The content of carbon black per 100 parts by mass of the rubber component is preferably 3 parts by mass or more, and more preferably 5 parts by mass or more. The upper limit is, for example, preferably 15 parts by mass or less, and more preferably 10 parts by mass or less.

(b-1-4) Other fillers

The rubber composition for tread may further contain, in addition to the above-mentioned carbon black and silica, may further contain fillers commonly used in the tire industry, such as graphite, calcium carbonate, talc, alumina, clay, aluminum hydroxide, mica, and magnesium sulfate. The content of these is, for example, more than 0.1 parts by mass and less than 150 parts by mass per 100 parts by mass of the rubber component.

(b-2) Softener (plasticizer) component

In consideration of proper dispersion of powder materials during kneading, it is preferable to use a softener component as necessary in the rubber composition. The softener component here refers to a material (plasticizer component) that imparts plasticity to the rubber component, and is a concept that includes both softener components that are liquid at 25°C and softener components that are solid at 25°C.

Examples of softener components include resin components, oils, liquid polymers (liquid rubbers), and ester-based plasticizers. These softener components may be derived from mineral resources such as petroleum and natural gas, may be derived from biomass, or may be derived from naphtha recycled from rubber products or non-rubber products. In addition, low molecular weight hydrocarbon components obtained by pyrolysis and extraction of used tires or products containing various components may be used as softener components. Among these, softener components derived from biomass or recycled materials are preferred as sustainable softener components.

These softener components may be used alone or in combination of two or more. The content of the softener component per 100 parts by mass of the rubber component is preferably 15 parts by mass or more, more preferably 20 parts by mass or more, and further preferably 25 parts by mass or more. The upper limit is, for example, preferably 85 parts by mass or less, more preferably 80 parts by mass or less, and further preferably 75 parts by mass or less. The content of the softener component includes the amount of oil contained in the rubber (oil-extended rubber) and the like.

(b-2-1) Oil

Examples of the oil include mineral oil, vegetable oil, and animal oil. From the viewpoint of life cycle assessment, waste oil after use in rubber mixers or engines, or refined waste cooking oil used in restaurants may also be used.

(b-2-1-1) Mineral oil

Mineral oil refers to oil derived from mineral resources such as petroleum and natural gas. Examples of mineral oil include paraffinic oil (mineral oil), naphthenic oil, and aromatic oil.

Specific examples of mineral oils include Mild Extract Solvated (MES), Distillate Aromatic Extract (DAE), Treated Distillate Aromatic Extract (TDAE), Treated Residual Aromatic Extract (TRAE), and Residual Aromatic Extract (RAE).

In addition, to be environmentally friendly, oils with low polycyclic aromatic compound (PCA) content may be used. Examples of the oils with low PCA include MES, TDAE, and heavy naphthenic oils.

Examples of commercially available mineral oils include paraffinic, aromatic, and naphthenic oils. Examples of such products that can be used include those manufactured by Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Showa Shell Sekiyu Co., Ltd., and Fuji Kosan Co., Ltd. These may be used alone or in combination of two or more kinds.

(b-2-1-2) Vegetable oil

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, and coconut oil, palm oil, palm kernel oil, olive oil, camellia oil, jojoba oil, macadamia nut oil, peanut oil, grapeseed oil, and wood wax.

Furthermore, vegetable oils also include refined oils (salad oil, etc.) obtained by refining each of the above oils, transesterified oils obtained by transesterification, hydrogenated oils, thermopolymerized oils obtained by thermal polymerization, oxidized polymerized oils obtained by oxidation, waste cooking oils that have been recovered from edible oils, and the like. Note that the vegetable oil may be liquid or solid at room temperature (25°C). These may be used alone or in combination of two or more.

The vegetable oil preferably contains acylglycerol, and more preferably contains triacylglycerol. Here, acylglycerol refers to a compound in which a hydroxyl group of glycerin and a fatty acid are ester-bonded. The acylglycerol is not particularly limited, and may be 1-monoacylglycerol, 2-monoacylglycerol, 1,2-diacylglycerol, 1,3-diacylglycerol, or triacylglycerol. Furthermore, the acylglycerol may be a monomer, a dimer, or a polymer of trimer or more. Dimer or more acylglycerols can be obtained by thermal polymerization, oxidative polymerization, or the like. The acylglycerol may be liquid or solid at room temperature (25°C).

The method for confirming whether acylglycerol is contained in the rubber composition is not particularly limited, but it can be confirmed by $^1$H-NMR measurement. For example, a rubber composition containing triacylglycerol is immersed in deuterated chloroform at room temperature (25°C) for 24 hours to remove the rubber composition, and then $^1$H-NMR is measured at room temperature, with setting, signals nearby 5.26 ppm, nearby 4.28 ppm, and nearby 4.15 ppm are observed, when the tetramethylsilane (TMS) signal is set to 0.00 ppm. Since the signals are presumed to be signals originate from the hydrogen atom bonded to the carbon atom adjacent to the oxygen atom of the ester group, the content of acylglycerol can be confirmed. Note that "nearby" here refers to a range of $\pm$0.10 ppm.

The fatty acid is not particularly limited, and may be an unsaturated fatty acid or a saturated fatty acid. Examples of the unsaturated fatty acid include monounsaturated fatty acids such as oleic acid, and polyunsaturated fatty acids such as linoleic acid and linolenic acid. Examples of the saturated fatty acid include butyric acid and lauric acid.

Among them, a fatty acid with few double bonds, i.e., a saturated fatty acid or a monounsaturated fatty acid is preferable, and oleic acid is preferable. As the vegetable oil containing such a fatty acid, for example, a vegetable oil containing a saturated fatty acid or a monounsaturated fatty acid may be used, or a vegetable oil modified by transesterification or the like may be used. In addition, to produce a vegetable oil containing such a fatty acid, a plant may be improved by breeding, genetic recombination, genome editing, or the like.

Examples of vegetable oils include products commercially available from Idemitsu Kosan Co., Ltd., Sankyo Yuka Kogyo Co., Ltd., ENEOS Co., Ltd., Orisoi Co., Ltd., H&R Co., Ltd., Toyokuni Oil Co., Ltd., Fuji Kosan Co., Ltd., and Nisshin Oillio Group Co., Ltd.

(b-2-2) Liquid rubber

Liquid rubber is a polymer that is in a liquid state at room temperature (25°C), and is a rubber component that can be extracted from a vulcanized tire by acetone extraction. Examples of the liquid rubber include farnesene-based polymers, liquid diene polymers, and hydrogenated products thereof.

The farnesene-based polymer is a polymer obtained by polymerizing farnesene, and has a structural unit based on farnesene. Farnesene includes isomers such as $\alpha$-farnesene ((3E, 7E) -3,7,11-trimethyl-1,3,6,10-dodecatetraene) and $\beta$-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight average molecular weight (Mw) measured by gel permeation chromatography (GPC) of, for example, more than $1.0 \times 10^3$ and less than $2.0 \times 10^5$. Here, Mw of the liquid diene polymer is a polystyrene conversion value measured by gel permeation chromatography (GPC).

As the liquid rubber, for example, products manufactured by Kuraray Co., Ltd., Clay Valley Co., Ltd., etc. can be used.

(b-2-3) Resin component

The resin component also functions as a tackifying component, and may be solid or liquid at room temperature. Specific examples of the resin components include rosin-based resin, styrene resin, coumaron-based resin, terpene resin, C5 resin, C9 resin, C5C9 resin, and acrylic resin, and two or more of these may be used in combination. These resin components may be provided with a modified group capable of reacting with silica, etc., as necessary.

Rosin-based resin is a resin whose main component is rosin acid obtained by processing pine resin. This rosin-based resin (rosins) can be classified according to the presence or absence of modification, and can be classified into unmodified rosin (unmodified rosin) and modified rosin (rosin derivative). Examples of unmodified rosin include tall rosin (also known as tall oil rosin), gum rosin, wood rosin, disproportionated rosin, polymerized rosin, hydrogenated rosin, and other chemically modified rosins. The modified rosin is a modified version of unmodified rosin, and examples thereof include rosin esters, unsaturated carboxylic acid-modified rosins, unsaturated carboxylic acid-modified rosin esters, amide compounds of rosin, and amine salts of rosin.

The styrene-based resin is a polymer using a styrene monomer as a constituent monomer, and examples thereof include a polymer obtained by polymerizing a styrene monomer as a main component (50% by mass or more). Specifically,

it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more of the styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; α, β-unsaturated carboxylic acids such as maleic anhydride, and acid anhydrides thereof.

Among coumaron-based resins, coumaron indene resin is preferred. Coumaron indene resin is a resin containing coumaron and indene as monomer components that constitute the skeleton (main chain) of the resin. In addition to coumaron and indene, a monomer component such as styrene, α-methylstyrene, methylindene, and vinyltoluene may be contained in the skeleton.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as a hydrogenated terpene resin obtained by hydrogenating the terpene resin. Examples of the terpene phenol include a resin obtained by copolymerizing the above-mentioned terpene compound and the phenolic compound, and a resin obtained by hydrogenating above-mentioned resin. Specifically, a resin obtained by condensing the above-mentioned terpene compound, the phenol compound and the formalin can be mentioned. Examples of the phenolic compound include phenol, bisphenol A, cresol, and xylenol. Examples of the aromatic-modified terpene resin include a resin obtained by modifying a terpene resin with an aromatic compound, and a resin obtained by hydrogenating above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumaron, and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The "C9 resin" refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene (AMS resin) or styrene or a copolymer of α-methylstyrene and styrene is preferable because it is economical, easy to process, and excellent in heat generation properties. A copolymer of α-methylstyrene and styrene is more preferred. As the aromatic vinyl-based resin, for example, those commercially available from Kraton Co., Eastman Chemical Co., etc. can be used.

The "C5C9 resin" refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Corporation, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method: a method described in US 4,414,370 B, JP 84-6207 A, JP 93-58805 A, JP 89-313522 A, US 5,010,166 B, Toa Synthetic Research Annual Report TREND2000 No. 3, p42-45, etc.) without using polymerization initiators, chain transfer agents, organic solvents, etc. as auxiliary raw

materials as much as possible, can be mentioned. In the present invention, (meth) acrylic means methacrylic and acrylic.

Examples of monomer components constituting the acrylic resin include (meth)acrylic acid, (meth)acrylic acid esters (alkyl esters, aryl esters, aralkyl esters, etc.), (meth)acrylamide, and (meth)acrylic acid derivatives such as (meth) acrylamide derivatives.

As the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth)acrylic acid or (meth)acrylic acid derivative.

The acrylic resin may be a resin composed of only a (meth) acrylic component or a resin also having a component other than the (meth) acrylic component. The acrylic resin may have a hydroxyl group, a carboxyl group, a silanol group, or the like.

Examples of the resin component which can be used include products of Maruzen Petrochemical Co., Ltd., Sumitomo Bakelite Co., Ltd., Yasuhara Chemical Co., Ltd., Tosoh Corporation, Rutgers Chemicals Co., Ltd., BASF Co., Ltd., Kraton Co., Ltd., Nitto Chemical Co., Ltd., Nippon Shokubai Co., Ltd., ENEOS Co., Ltd., Arakawa Chemical Industry Co., Ltd., and Taoka Chemical Industry Co., Ltd.

(b-3) Wax

The rubber composition may contain a wax. The content of the wax is, for example, preferably 0.5 parts by mass or more, more preferably 1.0 parts by mass or more, and further preferably 1.5 parts by mass or more, relative to 100 parts by mass of the rubber component. The upper limit is, for example, preferably 20 parts by mass or less, more preferably 15 parts by mass or less, and further preferably 10 parts by mass or less.

The wax is not particularly limited, and any wax commonly used in the tire industry can be suitably used. Examples of the wax include mineral waxes and vegetable-derived waxes. Mineral waxes refer to waxes derived from mineral resources such as oil and natural gas. Vegetable waxes refer to waxes derived from natural resources such as plants. Among them, mineral waxes are preferred.

Examples of the wax derived from plants include rice wax, carnauba wax, and candelilla wax. Examples of the mineral wax include paraffin wax, microcrystalline wax, and selected special waxes thereof, and paraffin wax is preferred. In the present invention, the wax does not contain stearic acid.

As the wax, for example, commercially available waxes from Ouchi Shinko Chemical Industry Co., Ltd., Nippon Seiro Co., Ltd., Paramelt Co., Ltd., etc. may be used. These waxes may be used alone or in combination of two or more kinds.

(b-4) Anti-aging agents

The rubber composition may contain an anti-aging agent. The content of the anti-aging agent is, for example, preferably more than 1 part by mass, and less than 10 parts by mass, relative to 100 parts by mass of the rubber component.

The anti-aging agent is not particularly limited, and examples thereof include naphthylamine-based anti-aging agents such as phenyl-α-naphthylamine; diphenylamine-based anti-aging agents such as octylated diphenylamine and 4,4'-bis(α,α'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), and N,N'-di-2-naphthyl-p-phenylenediamine (DNPD); quinoline-based anti-aging agents such as 2,2,4-trimethyl-1,2-dihydroquinoline polymers; monophenol-based anti-aging agents such as 2,6-di-t-butyl-4-methylphenol and styrenated phenol; and bis-, tris-, and polyphenol-based anti-aging agents such as tetrakis-[methylene-3-(3',5'-di-t-butyl-4'-hydroxyphenyl)propionate]methane. Among these, p-phenylenediamine-based anti-aging agents and quinoline-based anti-aging agents are preferred, and N-(1,3-dimethylbutyl)-N'-phenyl-p-phenylenediamine and 2,2,4-trimethyl-1,2-dihydroquinoline polymers are more preferred. These may be used alone or in combination of two or more kinds.

As commercially available products, for example, products from Seiko Chemical Co., Ltd., Sumitomo Chemical Co., Ltd., Ouchi Shinko Chemical Co., Ltd., Flexsys Co., Ltd., etc. can be used.

(b-5) Processing aids

The rubber composition may contain a processing aid. Examples of the processing aid include metal salts (compounds in which hydrogen atoms of an acid are replaced with metal ions), fatty acid amides, amide esters, and fatty acid esters. These may be used alone or in combination of two or more. Among these, metal salts and fatty acid amides are preferred, and metal salts are more preferred.

Examples of metals used in the metal salt include alkali metals such as potassium and sodium, and alkaline earth metals such as calcium and barium. Magnesium, zinc, nickel, molybdenum, etc. can also be used. Among these, alkali metals are preferred.

Examples of acids used in the metal salt include fatty acids such as lauric acid, myristic acid, and palmitic acid. In addition, boric acid, carbonic acid, hydrochloric acid, nitric acid, sulfuric acid, and the like can also be used.

Examples of commercially available processing aids that can be used include products from Kishida Chemical Co., Ltd., Kenei Pharmaceutical Co., Ltd., Struktol Co., Ltd., and Performance Additives Co., Ltd.

The content of the processing aid is preferably 1 part by mass or more, and more preferably 2 parts by mass or more, relative to 100 parts by mass of the rubber component. The upper limit is, for example, preferably 6 parts by mass or less, and more preferably 4 parts by mass or less.

(b-6) Lubricant (stearic acid)

The rubber composition may contain a lubricant. As the lubricant, a lubricant based on a fatty acid derivative such as stearic acid can be preferably used. As the stearic acid, a conventionally known one can be used. Specifically, for example, products of NOF Corporation, Kao Corporation, Fujifilm Wako Pure Chemical Co. Ltd., Chiba Fatty Acid Co. Ltd., etc. can be used. In addition, Struktol WB16 manufactured by Struktol Co., Ltd., and the like can also be used.

The content of stearic acid is, for example, preferably more than 0.5 parts by mass, and more preferably 2.0 parts by mass or more, relative to 100 parts by mass of the rubber component. The upper limit is preferably less than 10.0 parts by mass.

(b-7) Zinc oxide

The rubber composition may contain zinc oxide. The content of zinc oxide is, for example, preferably more than 0.5 parts by mass, and more preferably 3.0 parts by mass or more, relative to 100 parts by mass of the rubber component. The upper limit is preferably less than 10 parts by mass. As the zinc oxide, a conventionally known product can be used, and for example, products of Mitsui Mining & Smelting Co., Ltd., Toho Zinc Co., Ltd., Hakusui Tech Co., Ltd., Seido Chemical Industry Co., Ltd., Sakai Chemical Industry Co., Ltd., etc. can be used.

(b-8) Crosslinking agents and vulcanization accelerators

The rubber composition preferably contains a crosslinking agent such as sulfur. The content of the crosslinking agent is, for example, preferably more than 0.1 parts by mass, and more preferably 2.0 parts by mass or more, relative to 100 parts by mass of the rubber component. The upper limit is preferably less than 10.0 parts by mass. The sulfur content is the pure sulfur content, and in the case of using insoluble sulfur, it is the content excluding the oil content.

Examples of sulfur include powdered sulfur, precipitated sulfur, colloidal sulfur, insoluble sulfur, highly dispersible sulfur, soluble sulfur, and the like which are generally used in the rubber industry. These may be used alone or in combination of two or more kinds.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Cross-linking agents other than sulfur may be used. Specific examples of the cross-linking agent other than sulfur include vulcanizing agents containing a sulfur atom such as Tackirol V200 manufactured by Taoka Chemical Industry Co., Ltd., DURALINK HTS (1,6-hexamethylene-sodium dithiosulfate dihydrate) manufactured by Flexsys Co., Ltd., and KA9188 (1,6-bis (N, N'-dibenzylthiocarbamoyldithio)hexane; hybrid crosslinking agent) manufactured by Lanxess Co., Ltd., and organic peroxides such as dicumylperoxide.

The rubber composition preferably contains a vulcanization accelerator. The content of the vulcanization accelerator is, for example, preferably more than 0.3 parts by mass, more preferably 3.5 parts by mass or more, and further preferably 4.5 parts by mass or more, relative to 100 parts by mass of the rubber component. The upper limit is, preferably less than 10.0 parts by mass.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, N-oxyethylene-2-benzothiazolesulfenamide,

and N, N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-9) Other

In addition to the above-mentioned components, the rubber composition may contain additives commonly used in the tire industry, such as organic fillers such as cellulose fibers, and organic peroxides, as necessary. The content of these additives is, for example, more than 0.1 parts by mass and less than 50 parts by mass relative to 100 parts by mass of the rubber component.
In the present invention, among the above-mentioned materials, various materials containing carbon atoms (e.g., rubber, oil, resin, vulcanization accelerator, anti-aging agent, surfactant, etc.) may be derived from carbon dioxide in the atmosphere. As a method for obtaining the compound of the present invention from carbon dioxide, carbon dioxide may be directly converted, or methane obtained through a methanation process for synthesizing methane from carbon dioxide may be converted.

(2) Preparation of rubber composition for tread

The rubber composition for treads can be prepared by a general method, for example, a manufacturing method including a base kneading step of kneading a rubber component with a filler such as silica, and a finish kneading step of kneading the kneaded product obtained in the base kneading step with a crosslinking agent.
The kneading can be carried out using a known (sealed type) kneading machine such as a Banbury mixer, a kneader, or an open roll.
The kneading temperature in the base kneading step is, for example, higher than 50 °C and lower than 200 °C, and the kneading time is, for example, longer than 30 seconds and shorter than 30 minutes. In the base kneading step, in addition to the above-mentioned components, compounding agents conventionally used in the rubber industry, for example, softeners such as oil, stearic acid, zinc oxide, anti-aging agents, waxes, vulcanization accelerators, etc. may be appropriately added and kneaded as necessary.
In the finish kneading step, the kneaded product obtained in the base kneading step is kneaded with a crosslinking agent. The kneading temperature in the finish kneading step is, for example, higher than room temperature and lower than 80 °C, and the kneading time is, for example, longer than 1 minute and shorter than 15 minutes. In the finish kneading step, in addition to the above components, a vulcanization accelerator, zinc oxide, etc. may be appropriately added and kneaded as necessary.
The rubber composition obtained as described above can then be extruded into a predetermined shape to form a tread.

3. Tire manufacturing

The tire according to the present embodiment can be manufactured by a normal method. First, the rubber composition obtained as described above is molded into a predetermined shape to manufacture a tread. Next, the rubber composition is combined with other rubber components on a tire molding machine to manufacture an unvulcanized tire.
Specifically, an inner liner as a member for ensuring the airtightness of the tire, a carcass as a member that withstands the load, impact, and filled air pressure received by the tire, a belt as a member that tightly fastens the carcass and increases the rigidity of the tread, and bands as members that reinforce the belt are wound around a molding drum, and both ends of the carcass are fixed to both side edges, and beads as members for fixing the tire to the rim are arranged. After molding into a toroidal shape, a tread is pasted to the center of the outer periphery, and a sidewall is pasted to the radially outside to form the side portion, thereby producing an unvulcanized tire.
The unvulcanized tire thus produced is then heated and pressurized in a vulcanizer to obtain a tire. The vulcanization step can be carried out by applying a known vulcanization method. The vulcanization temperature is, for example, heigher than 120 °C and lower than 200 °C, and the vulcanization time is, for example, longer than 5 minutes and shorter than 15 minutes.
As described above, by satisfying the above formula (1), the tire obtained as described above can improve the durability of the tire during high-speed running by utilizing the combined effect of the properties of the sustainable polyester cord and the effect of a properly formed tread.
The tire according to the present invention can be suitably used as a passenger car tire, a large passenger car tire, a large SUV tire, a truck/bus tire, a motorcycle tire, a racing tire, a studless tire (winter tire), an all-season tire, a run-flat tire, or the like, and is particularly preferably used as a passenger car tire.

EXAMPLES

Examples (embodiments) considered to be preferable for carrying out the present invention will be described below, but the scope of the present invention is not limited to these examples.

A tire (tire size: 195/65R15) consisting of a tread molded from the various compounding materials shown below, and tire components such as bands and belts is examined, and the results calculated based on the evaluation method described below regarding the durability of the tire during high-speed running are shown in the lower part of Table 2.

1. Preparation of rubber composition

A rubber composition for tread is prepared using various compounding materials shown below.

(1) Compounding materials

(a) Rubber component

(a-1) NR: TSR20
(a-2) SBR: Modified S - SBR obtained by the method shown in the following (Production Example). (styrene content: 5% by mass, vinyl content: 30 % by mass, glass transition temperature: -72 °C)
(a-3) BR: Ubepol BR150B (Hicis BR) manufactured by Ube Industries (cis content: 97% by mass, trans content: 2% by mass, vinyl content: 1% by mass)

(Production example)

The above SBR is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95 °C. The polymer solution is continuously withdrawn from the top of the first reactor and supplied to the second reactor. The temperature of the second reactor is kept at 95 °C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR).

(b) Compounding materials other than rubber components

(b-1) Carbon black: Diablack N220 manufactured by Mitsubishi Chemical Corporation ($N_2SA$: 115 $m^2/g$)
(b-2) Silica: Ultrasil VN3 manufactured by Evonik Industries Co., Ltd. ($N_2SA$: 175 $m^2/g$, average primary particle diameter: 17 nm)
(b-3) Silane coupling agent: Si266 manufactured by Evonik Industries Co., Ltd. (Bis(3 - triethoxysilylpropyl)disulfide)
(b-4) Resin: SYLVATRAXX4401 manufactured by Kraton Co., Ltd. ($\alpha$- methylstyrene resin)
(b-5) Oil: Diana Process NH - 70S manufactured by Idemitsu Kosan Co., Ltd. (Aromatic process oil)
(b-6) Wax: REDEZON 7216-BS manufactured by REPSOL LUBRICANTES Y ESPECIALIDADES SA Co., Ltd.
(b-7) Anti-aging agent: ANTAGE 6C manufactured by Kawaguchi Chemical Industry Co., Ltd. (N-(1,3-dimethylbutyl)-N'-phenyl-p-phenylenediamine) (b-8) Stearic acid: bead stearic acid " Tsubaki " manufactured by NOF Corp.
(b-9) Zinc oxide: Two types of zinc oxide manufactured by Mitsui Mining & Smelting Co., Ltd.
(b-10) Sulfur: Powdered sulfur (containing 5% oil) manufactured by Tsurumi Chemical Industry Co., Ltd.
(b-11) Vulcanization accelerator -1: Nocceler CZ manufactured by Ouchi Shinko Chemical Industry Co., Ltd. (N-cyclohexyl-2-benzothiazylsulfenamide (CBS))
(b-12) Vulcanization accelerator - 2: Soxinol D manufactured by Sumitomo Chemical Co., Ltd. (N,N'-diphenylguanidine (DPG))

(2) Preparation of rubber composition for tread

Based on each of the formulations A to C shown in Table 1, materials other than sulfur and the vulcanization accelerator are kneaded for 5 minutes under the condition of 150 °C using a 1.7 L Banbury mixer manufactured by Kobe Steel, Ltd. to obtain a kneaded product.

Next, sulfur and a vulcanization accelerator are added to the kneaded mixture, and the mixture is kneaded for 5 minutes under conditions of 80 °C using an open roll to obtain rubber compositions for treads of formulations A to C.

[Table 1]

| (parts by mass) | Formulation A | Formulation B | Formulation C |
|---|---|---|---|
| N.R. | - | 60 | 40 |
| SBR | 60 | 30 | 40 |
| B.R. | 40 | 10 | 20 |
| Carbon Black | 5 | 5 | 15 |
| Silica | 90 | 90 | 110 |
| Silane Coupling Agent | 7.2 | 7.2 | 8.8 |
| Resin | 60 | 25 | 10 |
| Oil | 15 | 2 | 28 |
| Wax | - | 2 | 2 |
| Anti-aging agents | - | 3 | 3 |
| Stearic acid | 2 | - | 2 |
| Zinc oxide | 3 | - | 2 |
| Sulfur | 2 | 1.5 | 1.5 |
| Vulcanization accelerator-1 | 2 | 3.5 | 3.5 |
| Vulcanization accelerator-2 | 2 | - | - |
| 30°C tan $\delta$ | 0.30 | 0.25 | 0.35 |

2. Molding tire components (tread, band)

(1) Molding of tread

Next, treads having each thickness shown in Table 2 are molded using the rubber composition obtained above.

(2) Molding of band

In parallel, each band is molded by topping a predetermined rubber composition for the band on each band cord shown in Table 2. Note that, in Examples 1 to 5 and Comparative Example 3, mechanically recycled PET cords, which are sustainable polyester cords, are used as the band cords.

Total fineness, number of twists, twist coefficient, strength S, intermediate elongation E, breaking elongation, and dry heat shrinkage HS shown in Table 2 are values measured in accordance with the method specified in the above-mentioned JIS L1017:2002 "Testing method for chemical fiber tire cords". The cord diameter d is a value measured as the equivalent circle diameter of the circumscribed circle of a cross-section perpendicular to the extension direction, and the ends D is a value measured as the number of cords present in a width of 5 cm perpendicular to the longitudinal direction. The isophthalic acid content IF is a value measured by high performance liquid chromatography (HPLC), and the moist heat resistance strength retention rate is a value obtained by calculating the ratio of the strength after 48 hours of treatment with saturated steam at 135 °C (moist heat treatment) to the strength before treatment.

($S \times D$) is calculated from the strength S and the ends D, and ($L \times D / E$) is calculated from the specified load L (2.0 cN/dtex), the ends D and the intermediate elongation E. In addition, the dimensional stability index DSI is calculated as the sum (E + HS) of the intermediate elongation E and the dry heat shrinkage HS.

3. Tire manufacturing

Next, each of the treads and bands obtained above is pasted together with other tire components to form an unvulcanized tire, and the tire is press-vulcanized for 10 minutes under a condition of 170 °C to manufacture each of the test tires of Examples 1 to 5 and Comparative Examples 1 to 3.

Next, a rubber test piece for viscoelasticity measurement is prepared by cutting out a size of 20 mm in length, 4 mm in width, and 1 mm in thickness from the tread of each test tire, with the long side in the tire circumferential direction. For each rubber test piece, the loss tangent tan $\delta$ is measured using an "EPLEXOR (registered trademark)" series manufactured by GABO Corporation under conditions of a temperature of 30 °C, a frequency of 10 Hz, an initial strain of 5%, and a dynamic strain of 1%, in a deformation mode; tensile.

The thickness direction of the sample is the radial direction of the tire. When the same compounding is used in a plurality of examples, the average value of the values measured for each test tire is used.

4. Parameters

Then, $((d \times D) / (DSI \times 30\ °C \tan \delta \times A))$ is calculated.

5. Performance evaluation (evaluation of durability during high-speed running)

Each test tire is mounted on a rim (size = 16 × 6.5J), and a durability test of the tire at high-speed running is carried out in accordance with the method specified in JIS D 4230:1998 "Automobile tires".

Next, the result of Comparative Example 1 is set to 100 and indexed according to the following formula to provide an index of tire durability during high-speed running and evaluation. A larger value indicates better tire durability during high-speed running.

$$\text{Tire durability evaluation at high speeds} = [(\text{Test tire results}) / (\text{Comparative example 1 results})] \times 100$$

[Table 2]

| | Comparative Example | | | Example | | | | |
|---|---|---|---|---|---|---|---|---|
| | 1 | 2 | 3 | 1 | 2 | 3 | 4 | 5 |
| (Band cord) | | | | | | | | |
| Material | N66 | N66 | PET | PET | PET | PET | PET | PET |
| Composition | 1400 dtex/2 | 940 dtex/2 | 1440 dtex/2 | 1440 dtex/2 | 1100 dtex/2 | 1100 dtex/2 | 1440 dtex/2 | 1440 dtex/2 |
| Total fineness (dtex) | 2800 | 1880 | 2880 | 2880 | 2200 | 2200 | 2880 | 2880 |
| Number of twists (turns/10cm) | 25 | 35 | 48 | 48 | 50 | 26 | 48 | 48 |
| Twist factor | 132.3 | 151.8 | 257.6 | 257.6 | 234.5 | 122.0 | 257.6 | 257.6 |
| Isophthalic acid content (%) | 0 | 0 | 0 | 0 | 0 | 0 | 0 | 0 |
| Cord diameter d(mm) | 0.66 | 0.55 | 0.66 | 0.66 | 0.55 | 0.54 | 0.66 | 0.66 |
| Strength S (cN / dtex) | 6.7 | 6.0 | 6.4 | 6.4 | 6.4 | 6.4 | 6.4 | 6.4 |
| Ends D (cords/ 5cm) | 50 | 45 | 50 | 50 | 50 | 50 | 50 | 50 |
| S × D | 335.0 | 270.0 | 320.0 | 320.0 | 320.0 | 320.0 | 320.0 | 320.0 |
| Specified load L (cN / dtex) | 2.4 | 2.3 | 2.0 | 2.0 | 2.0 | 2.0 | 2.0 | 2.0 |
| Intermediate elongation E (%) | 7.3 | 7.3 | 4.2 | 4.2 | 4.6 | 2.5 | 4.2 | 4.2 |
| L ×D / E | 16.4 | 14.4 | 23.6 | 23.6 | 21.7 | 40.0 | 23.6 | 23.6 |

(continued)

| | Comparative Example | | | Example | | | | |
|---|---|---|---|---|---|---|---|---|
| | 1 | 2 | 3 | 1 | 2 | 3 | 4 | 5 |
| (Band cord) | | | | | | | | |
| Dry heat shrinkage (%) | 4.0 | 4.0 | 6.0 | 6.0 | 4.0 | 4.0 | 6.0 | 6.0 |
| Dimensional Stability Index DSI (%) | 11.3 | 11.3 | 10.2 | 10.2 | 8.6 | 6.5 | 10.2 | 10.2 |
| Elongation at break (%) | 20 | 20 | 16 | 16 | 16 | 16 | 16 | 16 |
| Moisture and heat resistance strength retention rate (%) | 90 | 90 | 90 | 90 | 90 | 90 | 90 | 90 |
| (Tread) | | | | | | | | |
| Formulation | A | A | C | A | A | A | A | B |
| 30°C tanδ | 0.30 | 0.30 | 0.35 | 0.30 | 0.30 | 0.30 | 0.30 | 0.25 |
| Thickness (mm) | 15 | 15 | 15 | 15 | 15 | 15 | 10 | 15 |
| (Parameter) | | | | | | | | |
| (d × D) / (DSI × 30°Ctanδ × A) | 0.65 | 0.49 | 0.62 | 0.72 | 0.71 | 0.92 | 1.08 | 0.86 |
| (Evaluation) | | | | | | | | |
| Durability at high-speed running | 100 | 77 | 97 | 116 | 104 | 126 | 138 | 122 |

Although the present invention has been described based on the embodiment, the present invention is not limited to the above embodiment. Various modifications can be made to the above embodiment within the same and equivalent scope of the present invention.

[EXPLANATION OF SYMBOLS]

1. Tire
2. Tread
3. Sidewall
4. Chafer
5. Beads
6. Inner liner
7. Carcass
8. Belt
9. Filler
10. Bands

CL. Tire equatorial plane

## Claims

**1.** A tire provided with a carcass; a belt provided on the outer side of the carcass in the tire radial direction; a band comprising a band cord and provided on an outer side of the belt in the tire radial direction; and a tread provided on the outer side of the band in the tire radial direction, wherein,

the band cord is a sustainable polyester cord; and
the following formula (1) is satisfied when the cord diameter of the band cord is d (mm), the number of cords present in a width of 5 cm in a direction perpendicular to the longitudinal direction of the tire is D (cords/5 cm), the

dimensional stability index is DSI (%), the loss tangent measured under conditions of a temperature of 30 °C, an initial strain of 5%, a dynamic strain of 1%, a frequency of 10 Hz, in a deformation mode; tensile, and the thickness of the tread is A (mm).

$$(d \times D) / (DSI \times 30\ °C \tan \delta \times A) \geqq 0.7 \qquad (1)$$

**2.** The tire according to Claim 1, wherein the $(d \times D) / (DSI \times 30\ °C \tan \delta \times A)$ is 0.71 or more, preferably 0.72 or more, preferably 0.86 or more, preferably 0.92 or more, and preferably 1.07 or more.

**3.** The tire according to claim 1 or 2, wherein the sustainable polyester cord is a sustainable polyethylene terephthalate cord.

**4.** The tire according to any one of claims 1 to 3, wherein the sustainable polyester cord is a two-ply cord.

**5.** The tire according to any one of claims 1 to 4, wherein the content of an isophthalic acid in the sustainable polyester cord is less than 0.1 mol%.

**6.** The tire according to any one of claims 1 to 5, wherein the strength S (cN/dtex) of the sustainable polyester cord is more than 5.0 cN/dtex, preferably more than 5.5 cN/dtex, preferably 6.0 cN/dtex or more, and preferably 6.4 cN/dtex or more.

**7.** The tire according to any one of claims 1 to 6, wherein the product $(S \times D)$ of a strength S (cN/dtex) of the sustainable polyester cord and a number D (cords/5 cm) of the sustainable polyester cords present in a direction 5 cm perpendicular to a longitudinal direction of the sustainable polyester cord is more than 270, preferably more than 290, preferably 310 or more, and preferably 320 or more.

**8.** The tire according to any one of claims 1 to 7, wherein a relationship formula $(L \times D / E)$ between an intermediate elongation E (%) of the sustainable polyester cord at a specified load L (cN/dtex) and a number D (cords/5 cm) of the sustainable polyester cords present in a direction 5 cm perpendicular to a longitudinal direction of the sustainable polyester cord is 15 or more, preferably 20 or more, preferably 21 or more, preferably 23 or more, and preferably 40 or more.

**9.** The tire according to any one of claims 1 to 8, wherein the elongation at break of the sustainable polyester cord is more than 5%, preferably more than 10%, and preferably more than 15 %.

**10.** The tire according to any one of claims 1 to 9, wherein the moist heat resistance strength retention rate of the sustainable polyester cord is 80% or more, preferably 85% or more, and preferably 90% or more.

**11.** The tire according to any one of claims 1 to 10, wherein the twist factor of the sustainable polyester cord is more than 120, preferably more than 121, preferably more than 150, preferably more than 200, preferably more than 234, preferably more than 250, and preferably more than 257.

**12.** The tire according to any one of claims 1 to 11, wherein the total fineness of the sustainable polyester cord is more than 1500 dtex, preferably more than 2000 dtex, preferably more than 2100 dtex, preferably more than 2500 dtex, and preferably more than 2800 dtex.

**13.** The tire according to any one of claims 1 to 12, wherein the twist number per 10 cm of length of the sustainable polyester cord is more than 25 (turns / 10 cm), preferably more than 30 (turns / 10 cm), preferably more than 40 (turns / 10 cm), preferably more than 47 (turns / 10 cm), and preferably more than 49 (turns / 10 cm).

**14.** The tire according to any one of claims 1 to 13, wherein the cord diameter of the sustainable polyester cord is more than 0.40 mm, preferably more than 0.45 mm, preferably more than 0.50 mm, preferably 0.54 mm or more, preferably 0.55 mm or more, and preferably 0.66 mm or more.

**15.** The tire according to any one of claims 1 to 14, wherein the number of cords D (cords/5 cm) of the sustainable polyester cord present in 5 cm in a direction perpendicular to the longitudinal direction of the sustainable polyester cord is more than 30 (cords/5 cm), preferably more than 40 (cords/5 cm), preferably more than 45 (cords/5 cm), and preferably 50

(cords/5 cm) or more.

**16.** The tire according to any one of claims 1 to 15, wherein the dry heat shrinkage (%) at 180 °C of the sustainable polyester cord measured in accordance with JIS L1017 is less than 8.0%, preferably less than 7.0 %, preferably less than 6.5 %, preferably less than 6.1 %, and preferably less than 4.1 %.

**17.** The tire according to any one of claims 1 to 16, wherein the Dimensional Stability Index DSI of the sustainable polyester cord is less than 11.5 %, preferably less than 11.0%, preferably less than 10.5%, preferably less than 10.3%, preferably less than 8.7%, and preferably less than 6.6 %.

**18.** The tire according to any one of claims 1 to 17, wherein the 30 °C tan $\delta$ of the tread is less than 0.35, preferably less than 0.33, preferably less than 0.31, and preferably less than 0.26.

**19.** The tire according to any one of claims 1 to 18, wherein the tread thickness A is less than 20 mm, preferably less than 15 mm, and preferably less than 12 mm.

FIG. 1

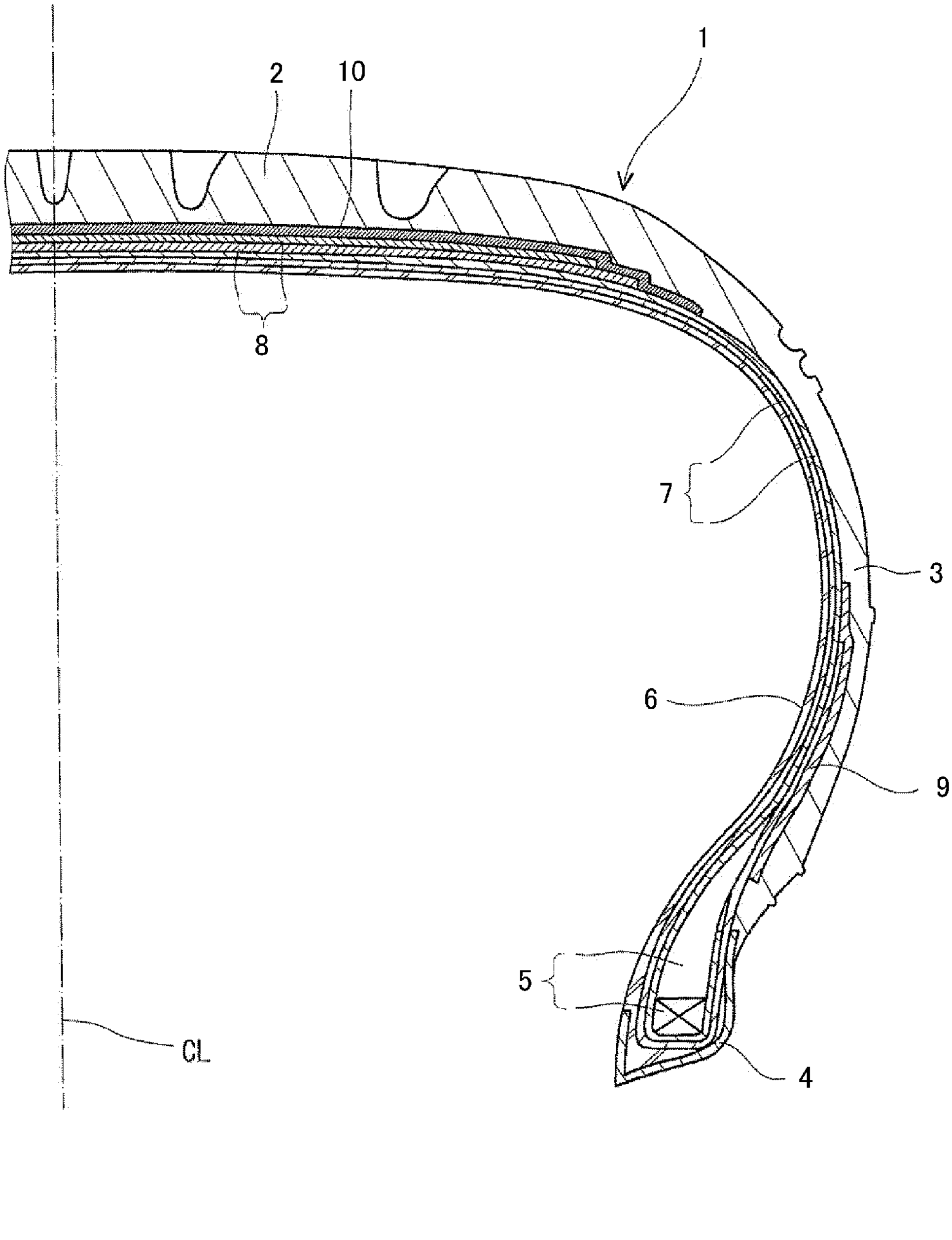

Europäisches Patentamt
European Patent Office
Office européen des brevets

# EUROPEAN SEARCH REPORT

Application Number
EP 25 19 4236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2024 039604 A (SUMITOMO RUBBER IND) 22 March 2024 (2024-03-22) * paragraphs [0005], [0006], [0008], [0032] - [0035], [0101] - [0105]; figure 1 * | 1-19 | INV. B60C9/20<br>ADD. B60C9/18 B60C9/22 B60C11/00 |
| A | JP 6 743511 B2 (YOKOHAMA RUBBER CO LTD) 19 August 2020 (2020-08-19) * paragraphs [0008], [0009], [0029] - [0035], [0037], [0038], [0044]; claims 1, 2, 4; figures 1, 2 * | 1-19 | |
| A | JP 2002 002214 A (TOYO TIRE & RUBBER CO) 8 January 2002 (2002-01-08) * paragraphs [0007], [0008], [0011], [0015], [0017]; claim 1; figures 1-4 * | 1-19 | |
| A | JP 2016 222872 A (YOKOHAMA RUBBER CO LTD) 28 December 2016 (2016-12-28) * paragraphs [0007], [0022], [0034]; figures 1, 2 * | 1-19 | |

TECHNICAL FIELDS SEARCHED (IPC)

B60C

The present search report has been drawn up for all claims

| Place of search | Date of completion of the search | Examiner |
|---|---|---|
| Munich | 4 February 2026 | Balázs, Matthias |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 4236

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| JP 2024039604 A | 22-03-2024 | NONE | |
| JP 6743511 B2 | 19-08-2020 | JP 6743511 B2 | 19-08-2020 |
| | | JP 2017226317 A | 28-12-2017 |
| JP 2002002214 A | 08-01-2002 | JP 4462586 B2 | 12-05-2010 |
| | | JP 2002002214 A | 08-01-2002 |
| JP 2016222872 A | 28-12-2016 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022038812 A
- JP 2010111753 A
- JP 2009002594 A
- US 4414370 A
- JP 59006207 A
- JP 5058805 A
- JP 1313522 A
- US 5010166 B


### Non-patent literature cited in the description


- *Akita Prefectural University Web Journal B*, 2019, vol. 6, 216-222
- *Toa Synthetic Research Annual Report TREND2000*, 42-45